# EUROPEAN PATENT APPLICATION

(11) **EP 4 454 914 A1**
(43) Date of publication of application: **30.10.2024**
(21) Application number: 22910594.5
(22) Date of filing: 28.10.2022
(51) Int. Cl.: B60K 1/04, B62D 49/00

(54) **ELECTRIC WORK VEHICLE**

(30) Priority: 24.12.2021 JP 2021211639
(71) Applicant: Kubota Corporation, Osaka 556-8601 (JP)
(72) Inventor: OKAZAKI Kazuto, Sakai-shi, Osaka 590-0908 (JP); KAWABATA Shinichi, Sakai-shi, Osaka 590-0908 (JP); TAMBA Daiki, Sakai-shi, Osaka 590-0908 (JP); MITSUI Kenji, Sakai-shi, Osaka 590-0908 (JP); MATSUFUJI Katsumi, Sakai-shi, Osaka 590-0908 (JP)
(74) Representative: Müller-Boré & Partner Patentanwälte PartG mbB
(86) International application number: PCT/JP2022/040432
(87) International publication number: WO 2023/119873

(57) **Abstract**

An electric work vehicle includes a travel motor (M) provided on a traveling body, a battery (4) provided at a front part of the traveling body and configured to supply electric power to the motor (M), a cable (26) configured to extract electric power from the battery (4), and a cover member (12) that covers the battery (4) and the cable (26). The cable (26) extends from a front part of the battery (4).

## Description

### Technical Field

The present invention relates to an electric work vehicle.

### Background Art

For example, as shown in Patent Document 1, there is a work vehicle (riding-type mower) in which an engine and an engine hood for housing the engine are provided at the front part of a traveling body, the work vehicle being configured to travel due to the output of the engine.

### Prior Art Documents

### Patent Documents

Patent Document 1: Japanese Patent Application Publication No. 2019-80514 (JP 2019-80514A)

### Disclosure of the Invention

### Problem to be Solved by the Invention

In order to obtain an electric work vehicle including a travel motor instead of an engine, it is necessary to include a battery that supplies power to the motor, and the weight of the battery is applied to the traveling body.

The present invention provides an electric work vehicle in which a battery is included at the front part of a traveling body, the front and rear weight of the traveling body being easily balanced.

### Means for Solving Problem

An electric work vehicle according to the present invention includes: a travel motor provided in a traveling body of the electric work vehicle; a battery provided at a front part of the traveling body and configured to supply electric power to the motor; a cable configured to extract electric power from the battery; and a cover member covering the battery and the cable, in which the cable extends from a front part of the battery.

According to this configuration, the battery is located on the body rear side relative to the cable at the portion covered by the cover member located at the front part of the traveling body, and therefore compared to the case where the cable extends from the rear part of the battery, the load of the battery is applied to, in the front part of the traveling body, the portion located on the body rear side relative to the portion corresponding to the cable, and it is possible to obtain an electric work vehicle in such a manner that it is easy to balance the front and rear weight of the traveling body.

In the present invention,
it is preferable that the motor is provided below a rear part of the battery.

According to this configuration, the load of the motor is applied to the traveling body at the same position as the rear part of the battery in the body front-rear direction and at a lower position than the battery, and therefore it is easy to balance the front and rear weight of the traveling body and lower the center of gravity of the traveling body.

In the present invention,
it is preferable to include an inverter device connected to the cable and the motor, in which the inverter device is provided below the battery on a body frontward side relative to the motor.

According to this configuration, since the inverter device is located at a position near the front part of the battery relative to the motor and at a position lower than the battery, it is easy to connect the cable extending from the battery to the inverter device.

In the present invention,
it is preferable to include a cover covering the motor and the inverter device from below.

According to this configuration, the inverter device and the motor can be protected by the cover such that the inverter device and the motor are not hit by dirt, stones, and the like that are thrown up from below the traveling body.

In the present invention,
it is preferable that the cover member includes a top plate covering the battery from above, and a front part of the top plate has a shape inclined downward toward the front.

According to this configuration, the height position of the front part of the top plate is lower than the height position of the rear part thereof, but since a space corresponding to the cable is located between the front part of the top plate and the front part of the battery, interference between the battery and the front part of the top plate can be avoided.

In the present invention,
it is preferable to include a front motive power extraction shaft provided at a front part of the traveling body and configured to extract motive power from the motor.

According to this configuration, the motive power from the motor can be extracted by the front motive power extraction shaft, and therefore when a work device such as a front mower or snow removal device is connected to the front part of the traveling body, the motive power from the motor is easily taken into the connected work device.

### Brief Description of the Drawings

FIG. 1 is a left side view of a tractor.
FIG. 2 is a left side view showing an arrangement of an inverter and the like.
FIG. 3 is a diagram showing a flow of motive power transmission.
FIG. 4 is a side view showing an engine portion.
FIG. 5 is a front view showing a wiring portion of a first cable.
FIG. 6 is a schematic side view showing a motive power transmission device for an electric grass cutter according to a first alternative embodiment.
FIG. 7 is a schematic side view showing a motive power transmission device for an electric grass cutter according to a second alternative embodiment.

### Best Mode for Carrying out the Invention

An embodiment of the present invention will be described based on the drawings. In the following description, the direction of arrow F in the drawings is "front", the direction of arrow B is "rear", the direction of arrow L is "left", and the direction of arrow R is "right", unless otherwise stated. Also, the direction of arrow U in the drawings is "up", and the direction of arrow D is "down".

### Overall Configuration of Tractor

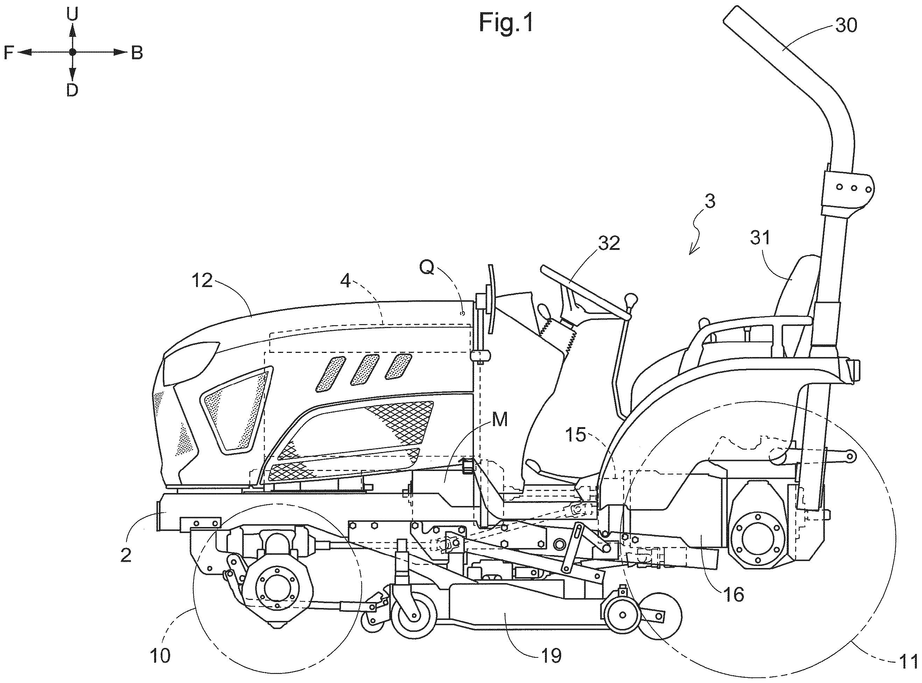

The following describes a tractor according to the present embodiment. As shown in FIG. 1, the tractor includes left and right front wheels 10, left and right rear wheels 11, and a cover member 12.

The tractor also includes a body frame 2 and a driving section 3. The body frame 2 is supported by the left and right front wheels 10 and the left and right rear wheels 11.

The cover member 12 is disposed at a front part of the body of the tractor. The driving section 3 is behind the cover member 12. In other words, the cover member 12 is in front of the driving section 3.

The driving section 3 includes a protective frame 30, a driver's seat 31, and a steering wheel 32. An operator can sit on the driver's seat 31. Accordingly, the operator can get in the driving section 3. The operator steers the left and right front wheels 10 by operating the steering wheel 32. The operator can perform various driving operations in the driving section 3.

The tractor includes a travel battery 4. The cover member 12 is configured to be pivotable about an opening/closing axis Q extending in the left-right direction of the body. Accordingly, the cover member 12 is configured to be openable and closable. When the cover member 12 is closed, the travel battery 4 is covered by the cover member 12.

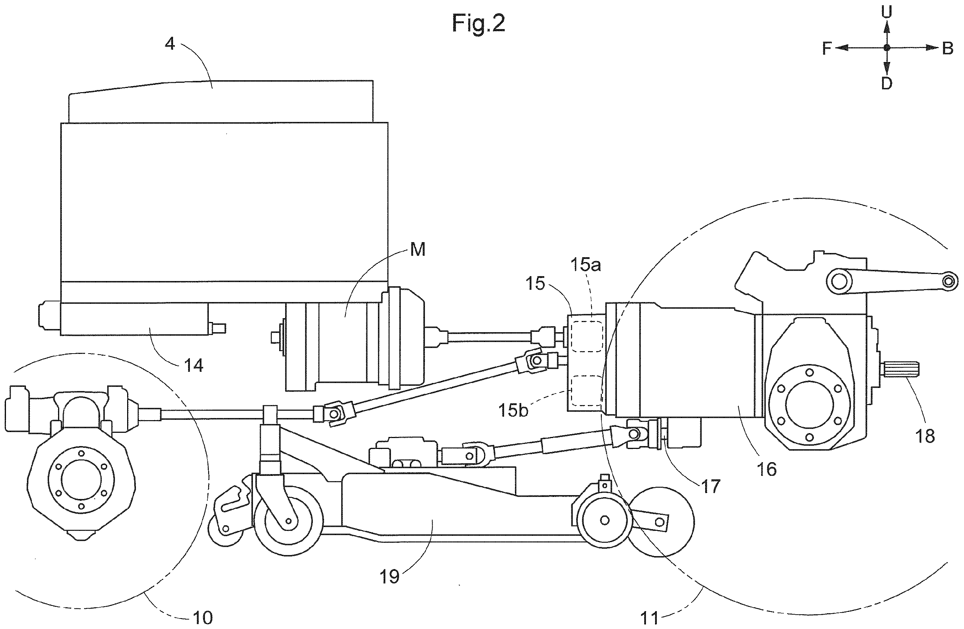

As shown in FIG. 2, the tractor includes an inverter 14 and a motor M. The travel battery 4 supplies power to the inverter 14. The inverter 14 converts DC power supplied from the travel battery 4 to AC power, and supplies the AC power to the motor M. The motor M is driven by the AC power supplied from the inverter 14.

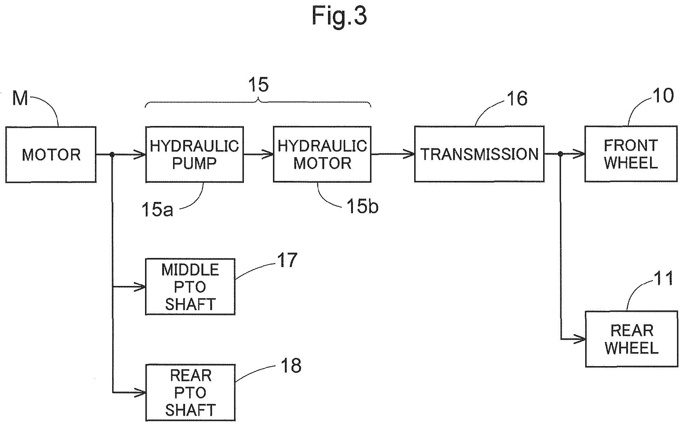

As shown in FIGS. 2 and 3, the tractor includes a hydraulic continuously variable transmission 15 and a transmission 16. As shown in FIG. 3, the hydraulic continuously variable transmission 15 includes a hydraulic pump 15a and a hydraulic motor 15b.

The hydraulic pump 15a is driven by rotational motive power transmitted from the motor M. As a result of the hydraulic pump 15a being driven, rotational motive power is output from the hydraulic motor 15b. The hydraulic continuously variable transmission 15 is configured to change the transmission of rotational motive power between the hydraulic pump 15a and the hydraulic motor 15b. Also, the hydraulic continuously variable transmission 15 is configured to be capable of changing the transmission ratio in a stepless manner.

The rotational motive power output from the hydraulic motor 15b is transmitted to the transmission 16. The rotational motive power transmitted to the transmission 16 is subjected to speed change by a gear transmission mechanism included in the transmission 16, and the rotational motive power is distributed to the left and right front wheels 10 and the left and right rear wheels 11. Thus, the left and right front wheels 10 and the left and right rear wheels 11 are driven.

As shown in FIGS. 2 and 3, the tractor also includes a middle PTO shaft 17 and a rear PTO shaft 18. Rotational motive power output from the motor M is distributed to the hydraulic pump 15a, the middle PTO shaft 17, and the rear PTO shaft 18. The middle PTO shaft 17 and the rear PTO shaft 18 are rotated by the distributed rotational motive power.

If a work device is connected to the middle PTO shaft 17 or the rear PTO shaft 18, the work device is driven by rotational motive power transmitted by the middle PTO shaft 17 or the rear PTO shaft 18. For example, in the present embodiment, a grass cutting device 19 is connected to the middle PTO shaft 17 as shown in FIG. 2. The grass cutting device 19 is driven by rotational motive power transmitted by the middle PTO shaft 17.

An electric grass cutter (an example of an "electric work vehicle") includes a tractor and a grass cutting device 19, as shown in FIG. 1. As shown in FIG. 1, the tractor has a traveling body including the body frame 2, the left and right front wheels 10, and the left and right rear wheels 11.

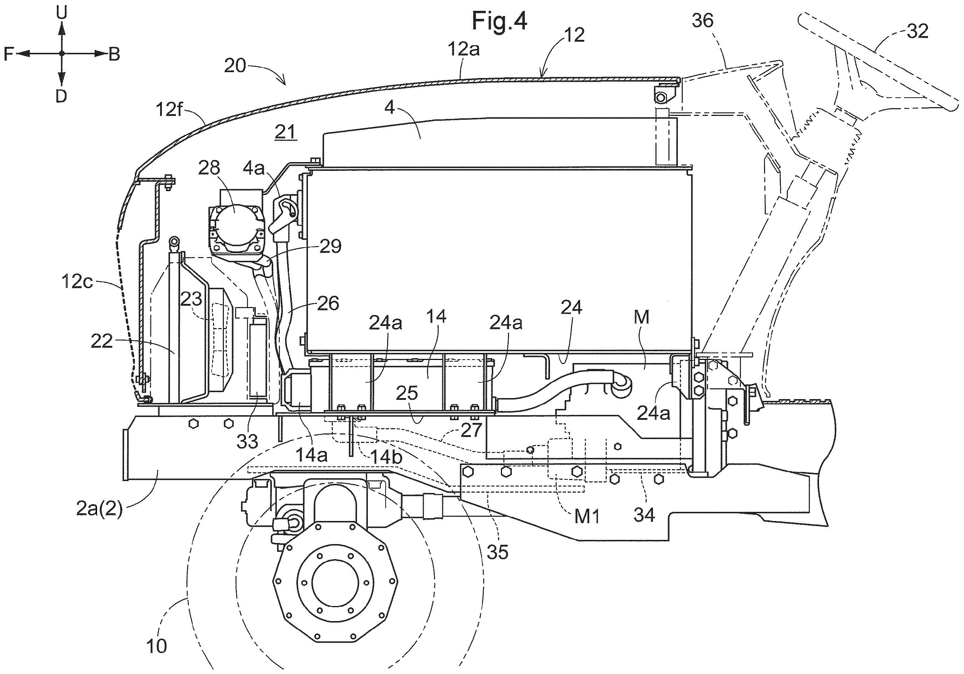

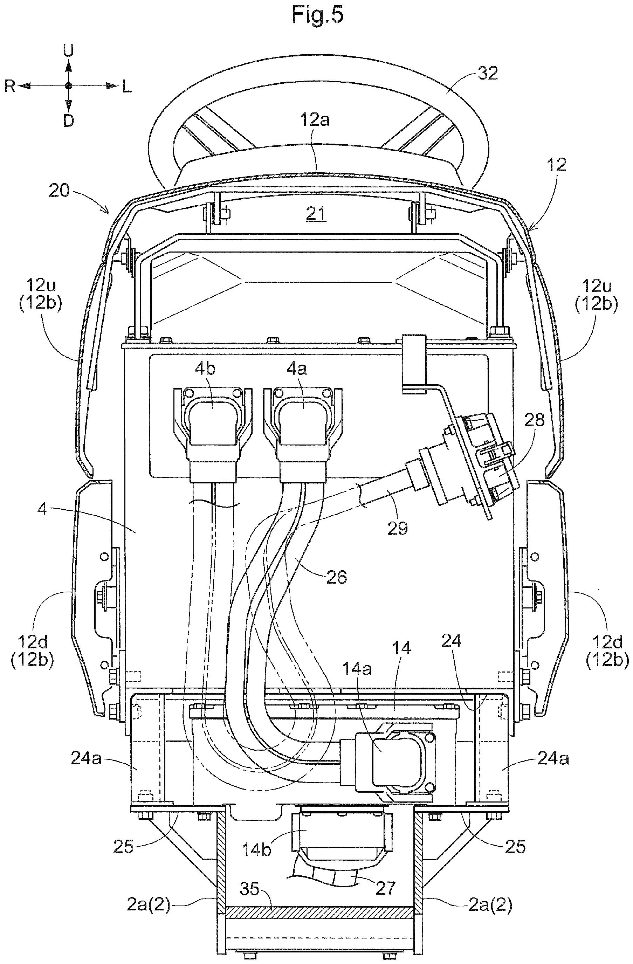

The direction of arrow F shown in FIGS. 4 and 5 indicates the frontward direction of the traveling body, the direction of arrow B indicates the rearward direction of the traveling body, the direction of arrow U indicates the upward direction of the traveling body, the direction of arrow D indicates the downward direction of the traveling body, the direction of arrow R shown in FIG. 5 indicates the rightward direction of the traveling body, and the direction of arrow L indicates the leftward direction of the traveling body.

As shown in FIGS. 4 and 5, the body frame 2 includes a pair of left and right main frames 2a and the like. The pair of left and right main frames 2a are provided in such a manner as to extend along the front-rear direction of the traveling body. The grass cutting device 19 is supported at a portion of the body frame 2 between the front wheels 10 and the rear wheels 11 in such a manner as to be movable up and down. As shown in FIGS. 1 and 4, an engine portion 20 including the motor M and the like is formed at the front part of the traveling body. A driving section 3 is formed at the rear part of the traveling body. The driving section 3 includes a panel cover 36 having an instrument panel (not shown).

As shown in FIGS. 1 and 4, the engine portion 20 includes a battery room 21 formed by the cover member 12. As described above, the battery room 21 is provided with the motor M, which is a motive power source for the front wheels 10 and the rear wheels 11, the travel battery 4, and the inverter 14. A radiator 22 that cools the inverter 14 is in front of the inverter 14. A rotary fan 23 that introduces cooling air into the radiator 22 is behind the radiator 22. An oil cooler 33 is behind the rotary fan 23.

The travel battery 4 is placed on and fixed to a base frame 24 supported by the body frame 2. The base frame 24 is supported on the body frame 2 due to leg members 24a provided at a plurality of locations on the base frame 24 being supported by support portions 25 provided on the pair of left and right main frames 2a.

The motor M is below the rear part of the travel battery 4. The motor M is supported by the support members 34 connected to the pair of left and right main frames 2a.

The inverter 14 is below the travel battery 4 on the body frontward side relative to the motor M. The inverter 14 is placed on and fixed to the support portions 25 provided on the pair of left and right main frames 2a. The inverter 14 is located between the left and right leg members 24a.

As shown in FIGS. 4 and 5, the travel battery 4 and the inverter 14 are connected by a first cable 26 extending from the front part of the travel battery 4. Specifically, the first cable 26 is wired in such a manner as to extend downward in front of the travel battery 4 from an output port 4a provided at the front part of the travel battery 4 and so that an extension end portion thereof connects to an input port 14a provided at the front part of the inverter 14. As shown in FIG. 4, an output port 14b provided in a lower part of the inverter 14 and an input port M1 provided in a front part of the motor M are connected to each other by a second cable 27. The second cable 27 passes between the pair of left and right main frames 2a in the body front-rear direction.

The DC power stored in the travel battery 4 is extracted by the first cable 26, supplied to the inverter 14, and converted into AC power, and the AC power resulting from conversion is supplied from the inverter 14 to the motor M by the second cable 27.

Reference numeral 28 shown in FIGS. 4 and 5 indicates a charging inlet. The charging inlet 28 is connected to an extension end portion of a charging cable 29 extending from a charging port 4b provided in the front part of the travel battery 4. The travel battery 4 includes a battery case portion supported by the base frame 24 and a battery body accommodated in the battery case portion. The output port 4a and the charging port 4b are provided in the front wall of the battery case.

As shown in FIGS. 4 and 5, the cover member 12 covers the motor M, the travel battery 4, the inverter 14, the first cable 26, and the radiator 22.

Specifically, the cover member 12 includes a top plate 12a that covers the travel battery 4, the first cable 26, and the radiator 22 from above, left and right side plates 12b that cover the motor M, the travel battery 4, the inverter 14, the first cable 26, and the radiator 22 from both sides, and a front plate 12c that covers the travel battery 4, the first cable 26, the inverter 14, and the radiator 22 from the front. As shown in FIG. 4, the front part 12f of the top plate 12a has a shape that slopes downward toward the front.

In this embodiment, the left and right side plates 12b each include an upper side plate 12u extending downward from the lateral end of the top plate 12a, and a lower side plate 12d formed separately from the upper side plate 12u, but the upper side plate 12u and the lower side plate 12d may also be formed in one piece. In this embodiment, the front plate 12c is formed integrally with the top plate 12a, but the front plate 12c and the top plate 12a may also be formed separately from each other.

As shown in FIGS. 4 and 5, the traveling body includes a cover 35 that covers the motor M, the inverter 14, and the second cable 27 from below. The cover 35 is supported by a pair of left and right main frames 2a. The cover 35 prevents dirt, stones, and the like thrown up by the front wheels 10 and the like from hitting the motor M, the inverter 14, and the second cable 27.

### Alternative Embodiments

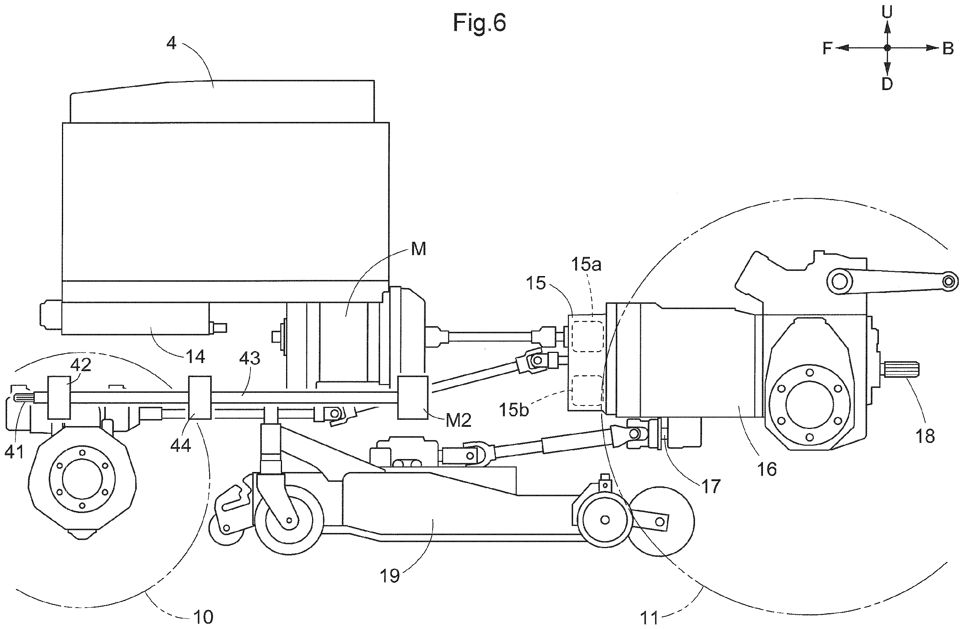

(1) FIG. 6 is a schematic side view showing a motive power transmission device for an electric grass cutter according to a first alternative embodiment. In the electric grass cutter of the first alternative embodiment, a first front motive power extraction shaft 41 is provided at the front part of the traveling body. The first front motive power extraction shaft 41 extracts motive power from the travel motor M.

Specifically, the first front motive power extraction shaft 41 is rotatably supported by a first support portion 42 provided at the front part of the body frame 2. A rear part of the first front motive power extraction shaft 41 and an output portion M2 provided in the travel motor M are connected to each other via a rotation shaft 43. The rotation shaft 43 is rotatably supported by a second support portion 44 provided in the body frame 2 between the first support portion 42 and the output portion M2. The motive power output by the travel motor M from the output portion M2 is transmitted to the first front motive power extraction shaft 41 via the rotation shaft 43.

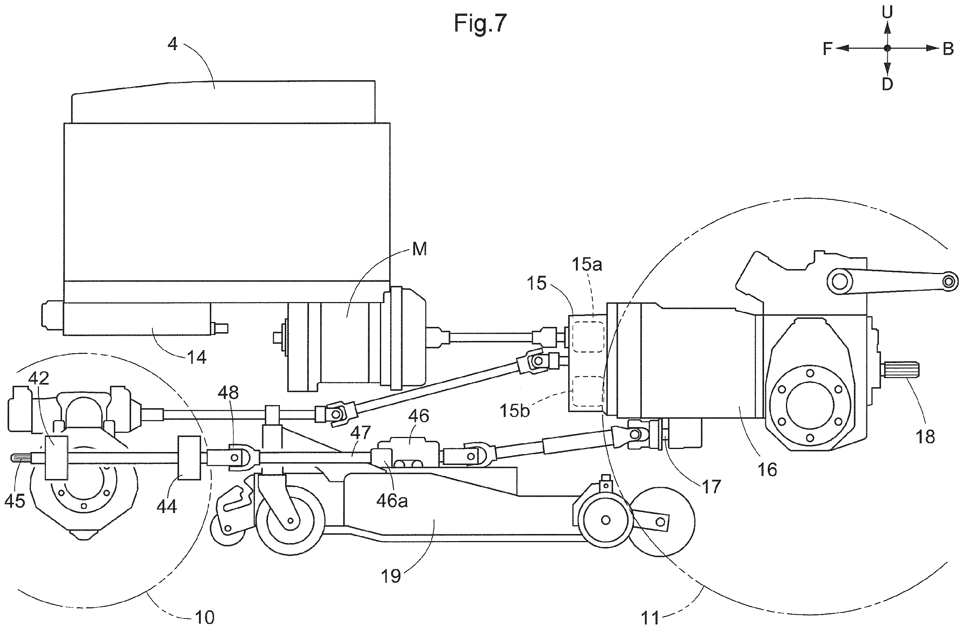

(2) FIG. 7 is a schematic side view showing a motive power transmission device for an electric grass cutter according to a second alternative embodiment. In the electric grass cutter of the second alternative embodiment, a second front motive power extraction shaft 45 is provided at the front part of the traveling body. The second front motive power extraction shaft 45 extracts motive power from the travel motor M.

Specifically, the second front motive power extraction shaft 45 is rotatably supported by a first support portion 42 provided at the front part of the body frame 2. A rear part of the second front motive power extraction shaft 45 and a motive power extraction portion 46a provided in an input case 46 of a grass cutting device 19 are connected to each other via a rotation shaft 47. The rotation shaft 47 is rotatably supported by a second support portion 44 provided in the body frame 2 between the first support portion 42 and the motive power extraction portion 46a. A universal joint 48 serving as a bending portion that allows the grass cutting device 19 to move up and down is provided at a portion of the rotation shaft 47 between the second support portion 44 and the motive power extraction portion 46a. The motive power output by the travel motor M is transmitted to the second front motive power extraction shaft 45 via the middle PTO shaft 17, the input case 46, and the rotation shaft 47.

(3) In the above-described embodiment, an example is shown in which the grass cutting device 19 is provided, but the electric work vehicle may also include any work device such as a chemical spraying device, instead of the grass cutting device 19.

(4) In the above-described embodiment, an example was shown in which the motor M was provided below the rear part of the travel battery 4, but the motor M may also be provided at any location, such as behind the travel battery 4.

(5) The above-described embodiment showed an example in which the inverter 14 is provided below the travel battery 4 on the body frontward side relative to the motor M, but there is no limitation to this, and the inverter 14 may also be provided at any location, such as behind the motor M.

(6) In the embodiment described above, an example was shown in which the cover 35 was provided, but the cover 35 need not be provided.

(7) In the above-described embodiment, an example was shown in which the front part 12f of the top plate 12a has a shape that slopes downward toward the front, but there is no limitation to this, and the front part 12f may have any shape.

(8) A heat shield plate that prevents heat transfer to the first cable 26 may also be provided between the rotary fan 23 and the oil cooler 33 or between the oil cooler 33 and the first cable 26.

### Industrial Applicability

This invention is applicable to an electric work vehicle equipped including a travel motor.

### Description of Reference Signs

4: Travel battery (battery)
12: Cover member
12a: Top plate
12b: Side plate
12f: Front part
14: Inverter (inverter device)
26: First cable (cable)
35: Cover
41: First front motive power extraction shaft (front motive power extraction shaft)
45: Second front motive power extraction shaft (front motive power extraction shaft)
M: Motor

## Claims

1. An electric work vehicle comprising:
a travel motor provided in a traveling body;
a battery provided at a front part of the traveling body and configured to supply electric power to the motor;
a cable configured to extract electric power from the battery; and
a cover member covering the battery and the cable,
wherein the cable extends from a front part of the battery.

2. The electric work vehicle according to claim 1,
wherein the motor is provided below a rear part of the battery.

3. The electric work vehicle according to claim 2, further comprising
an inverter device connected to the cable and the motor,
wherein the inverter device is provided below the battery on a body frontward side relative to the motor.

4. The electric work vehicle according to claim 3, further comprising
a cover covering the motor and the inverter device from below.

5. The electric work vehicle according to any one of claims 1 to 4,
wherein the cover member includes a top plate covering the battery from above, and
a front part of the top plate has a shape that slopes downward toward the front.

6. The electric work vehicle according to any one of claims 1 to 5, further comprising
a front motive power extraction shaft provided at a front part of the traveling body and configured to extract motive power from the motor.
